# EUROPEAN PATENT APPLICATION

(11) **EP 4 362 323 A1**
(43) Date of publication of application: **01.05.2024**
(21) Application number: 23000077.0
(22) Date of filing: 26.05.2023
(51) Int. Cl.: H02S 20/10, F24S 25/12, F24S 25/50, H02S 20/32

(54) **AERIAL PHOTOVOLTAIC SOLAR INSTALLATION**

(30) Priority: 26.05.2022 ES 202230875 U
(71) Applicant: Gonzalez Ruisanchez, Jose Raul, 33003 Oviedo (ES); Peon Gonzalez, Jose Luis, 33003 Oviedo (ES)
(72) Inventor: Gonzalez Ruisanchez, Jose Raul, 33003 Oviedo (ES); Peon Gonzalez, Jose Luis, 33003 Oviedo (ES)

(57) **Abstract**

AERIAL PHOTOVOLTAIC SOLAR INSTALLATION characterized by being installed suspended in the air at a great height above the ground for what it includes the following elements:
-Several photovoltaic modules (1)
-At least two supporting cables (2)
-Two supports (3), one at each of the ends, of each supporting cable.
-A metal support structure (4) for the photovoltaic modules (1)
-Four suspension points (5) from the metallic structure (4)
-Two support carriages (6) from which the metal structure (4) is suspended.
-A traction cable (7)
-A perpendicular connecting bar between two support carriages (9)
-Two longitudinal connection bars between suspension points (12.2)

## Description

### Technical field

The proposed invention is referred to a new system of the photovoltaic solar energy installation.

The main object of the present invention is a new way of installing photovoltaic modules.

### Background of the invention

Nowadays the known types of photovoltaic solar installations are the following:
- installation on walls and facades, roofs and building roofs, or on posts;
- installation on the ground, known as "solar farms or solar parks: the photovoltaic modules are attached to either stationary structures or to structures equipped with any sun tracking system;
- installations on water masses, known as floating photovoltaic, where the photovoltaic modules are installed on floating structures fastened to each other and anchored to the bottom.

The installation on façades, roofs or posts brings added value to the constructions and is perceived as positive by society, but the power to be installed is limited in most cases, and these installations are more aimed to auto consumption and/or off-grid installations. Solar farms or solar parks installed in rural areas take large land areas, preferably flat land, making almost impossible their agricultural use. Although some attempts to make both activities compatible are being made, the so-called agro photovoltaic or agro voltaic, this one is only possible for certain small crops that require the use of little machinery, because the structures and their supports (since the structures are taller, they need a broader base of support), complicate the mechanization and reduce large part of arable land. In the same way, solar farms or solar parks are incompatible with the forest and hunting use, and only in some cases there is compatibility with livestock. On the other hand, the perimeter fences of these installations complicate the wildlife movements, the access to some places is restricted and contribute to a reduction in the biodiversity of the area. This is why the negative perception and rejection of rural society of this kind of installations is increasing.

Furthermore, there is a need for large land movements if solar farms o solar parks are to be installed in mountainous areas, that generates high environmental impact caused by these installations, which combined with the cost of land movements, access tracks construction and slopes stabilization efforts result in a notable increase of the cost of the installation, in other words, environmentally unviable. For these reasons, the vast majority of the installations to the floor are on flat lands, leading to a clear obstacle to the massive deployment of photovoltaic energy in mountain or complicated terrain areas.

As for the floating photovoltaic, its deployment in lakes and reservoirs would limit their recreational use, so a strong social opposition to their deployment is already being generated. And in navigable channels their installation would be impossible.

### Explanation of the invention

In order to increase the deployment of the photovoltaic energy, especially in mountainous, remote and/or isolated areas, reduce the negative environmental impacts generated by earthworks , as well as minimize the costs of such movements, but above all, make the use compatible of rural land (agricultural, livestock, forestry and hunting) and preserve the biodiversity of an area with the generation of large-scale photovoltaic solar energy, the invention proposes raising the photovoltaic solar installation, making it independent of the topography and land use. For this we would use the 3^{rd} dimension (z) to escape the restrictions imposed by the terrain (x, y).

With this invention, the photovoltaic modules are mounted on a metal structure, which in turn is suspended from at least two supporting steel cables (closed or semi-closed), whose ends are anchored and supported by a structure (metallic, concrete, or anchored to a rock slope). In this way, wide bays and/or unevenness can be saved, with minimal land occupation. As a result, the installation is fully compatible with the uses of the land, and of the bodies of water, and the environmental impact is reduced with respect to current photovoltaic installations on the ground. Since large perimeter fencing is not necessary, the area's wildlife is not affected, and hunting use of the area can be maintained. As the height at which the photovoltaic modules are located is higher, and the physical occupation of the land by the supports is much lower, this invention clearly exceeds the field of application of agro photovoltaic. On the other hand, by raising the photovoltaic modules from the ground, the effects of the shadows and dust are reduced, and in the case of the risk of forest fires, the safety of the installations will be greater the higher the height of the installation with respect to the ground. This option not only makes it possible to counteract the scarcity of usable space, but also contributes to the sustainable development of rural areas, since its inhabitants have the opportunity to develop new sources of income without losing the productivity and uses of their land.

This invention can also be used to allow the deployment of photovoltaic energy on roads, highways, parking lots, railway lines, rivers, irrigation channels, mining operations (active and/or restored), mineral storage parks, logistic areas... because of the possibility of salving large bays without the need for intermediate supports and, therefore, without interfering with the activities previously implemented in an area, thus providing an additional source of income to its owners, or generating all or part of the energy that they need for their processes (auto-consumption). With this invention it will be achieved that large areas, currently unproductive from the point of view of photovoltaic electricity generation, will be able to be used for renewable electricity generation and this contributes significantly to achieving the energy independence of our country and the decarbonisation objectives of the economy.

Likewise, this invention can also be used for, in addition to generation photovoltaic solar energy, contribute to concealing the visual impact of landfills, difficult-to-restore slopes in quarries and/or mining operations, large transport infrastructures, logistics areas, business parks, industrial complexes...

Another possible application of this invention would be to, in addition to generating photovoltaic solar energy, protect crops, fruit trees, water masses and populations in areas of high solar irradiation by acting partially as a sunshade.

### Brief description of the drawings

To complement the description that is being made and in order to help a better understanding of the characteristics of the invention, a series of drawings are attached as an integral part of such description, where, for illustrative and non-limiting purposes, the following has been represented:

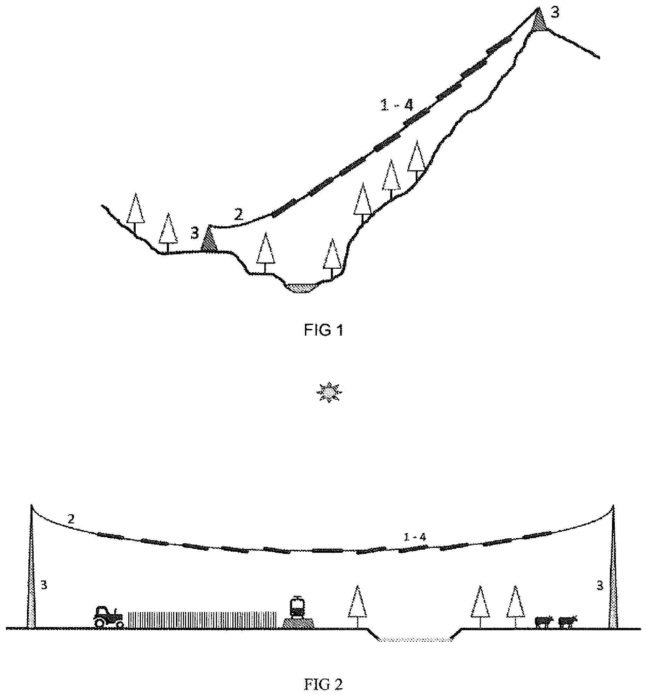

Figure 1.-It shows a schematic side view of the invention where the main elements are seen: photovoltaic modules (1), mounted on a metallic structure (4), steel supporting cable (2) and its supports at the ends (3) and where it is visualized how the installation is compatible with the topography of the area and land uses.
Figure 2.-It shows a schematic side view of the invention where the main elements are seen: photovoltaic modules (1), mounted on a metallic structure (4), steel supporting cable (2) and its supports at the ends (3) and where it is displayed how the installation allows overcoming large bays and be compatible with the different land uses.

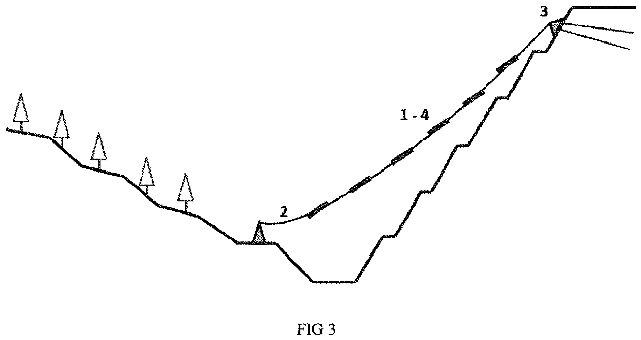

Figure 3.-It shows a schematic side view of the invention where the main elements are seen: photovoltaic modules (1), mounted on a metallic structure (4), steel supporting cable (2) and its supports at the ends (3) and where it is displayed how the installation can help to hide the visual impact of an old mining exploitation, contribute to the restoration of degraded mining spaces and allow the use of these lands to renewable electricity generation.

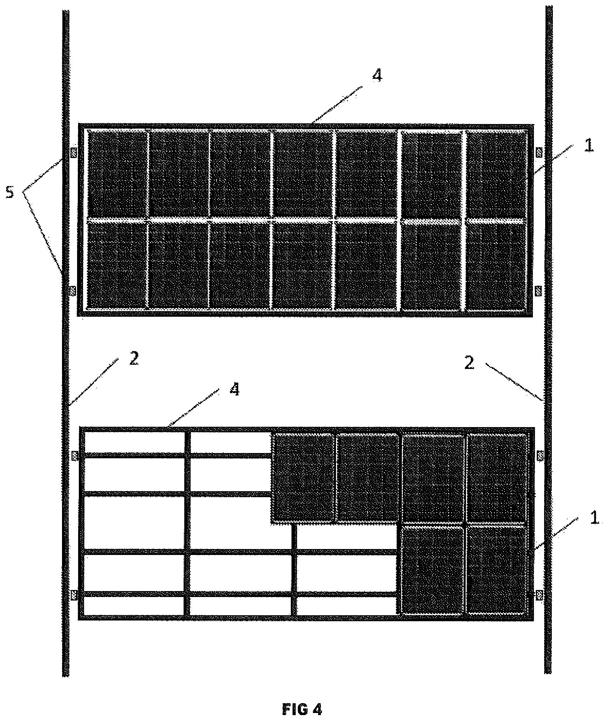

Figure 4.-It shows a schematic top view of 2 groups of photovoltaic modules (1) mounted on 2 metal structures (4), the suspension points of the structure (5) and the steel supporting cables (2) on which the groups of photovoltaic modules are suspended. At the bottom you can see the metal structure on which the photovoltaic modules are mounted. For the simplicity of the drawing, the support carriages (6) or the fixed carrying supports (14) have not been drawn.

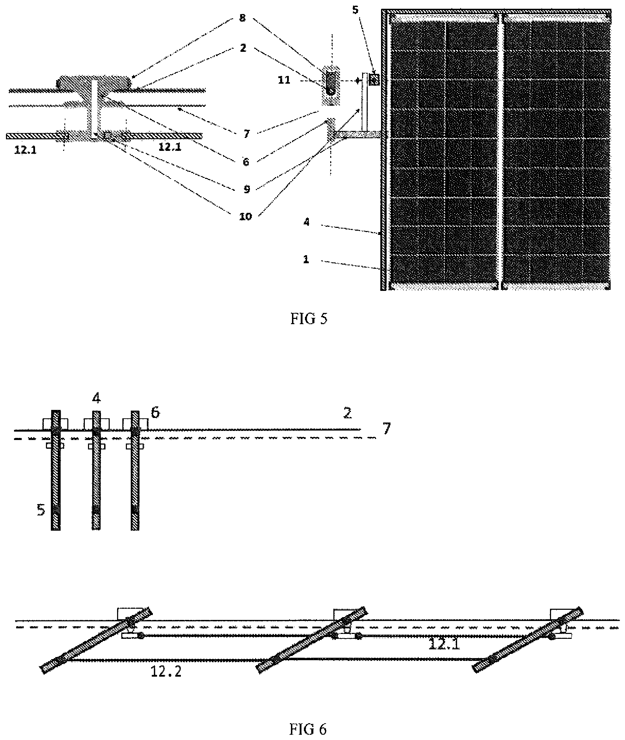

Figure 5.-It shows a schematic front and side view of the support carriage (6) from which the metal structure (4) is suspended and which circulates on the steel supporting cable (2) by the pulling action of a traction cable (7). A bar (9) joins two support carriages (6) perpendicularly. The connection bar (12) joins two support carriages (6) longitudinally.
Figure 6.-It shows a schematic side view of an aerial photovoltaic solar installation on a horizontal steel supporting cable (2), or with a slight slope, where you can see, in the upper part of the figure, the photovoltaic modules suspended from the trolleys during assembly (folded panels) and their position once deployed (bottom). Acting on one of the ends of the line of lower connection bars (12), the angle of the metallic structure can be adjusted (4), and therefore, the angle of the photovoltaic modules.

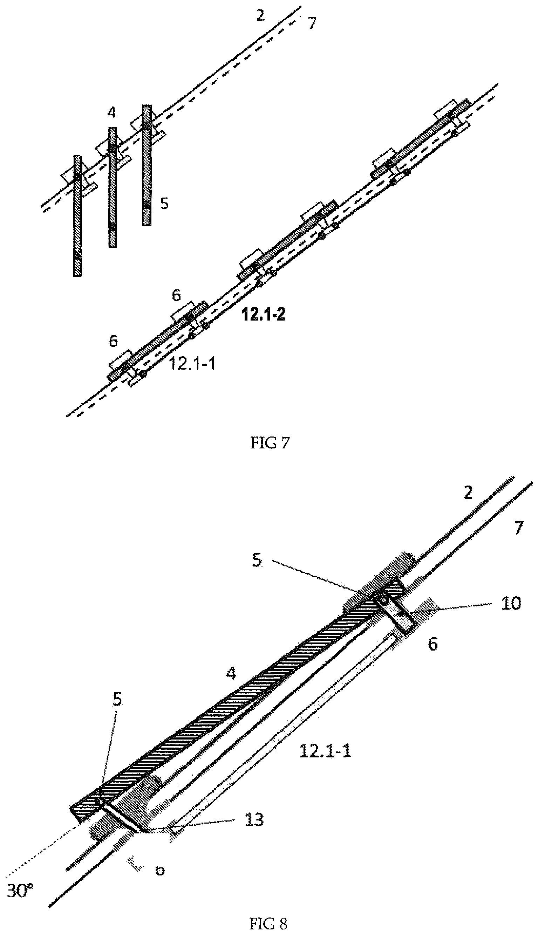

Figure 7.-It shows a schematic side view of an aerial photovoltaic solar installation on a steel supporting cable (2) with a slope of 30°, for which a second support carriage (6) is mounted, to suspend the metal structure (4) from the lower suspension point (5). In the upper part of the figure you can see the photovoltaic modules suspended from the carriages during assembly (retracted panels), and in the lower part, their position once unfolded, after mounting the second group of support carriages (6).
Figure 8.-It shows a schematic side view of a part of an aerial photovoltaic solar installation on a steel supporting cable (2) with a slope higher of 30°, where you can see the two support carriages (6), on which the metallic structure (4) and the connecting bar (12) that joins both cars longitudinally are suspended. To adjust the inclination angle of the photovoltaic modules, the fixed support (10) is replaced by a spindle (13) on the lower support carriage (4). The minimum length of this spindle is equal to that of the fixed support (10). The stroke of the spindle (13) will be chosen according to the deviation of the slope of the closed steel supporting cable (2) with respect to the optimal angle of inclination of the panel.

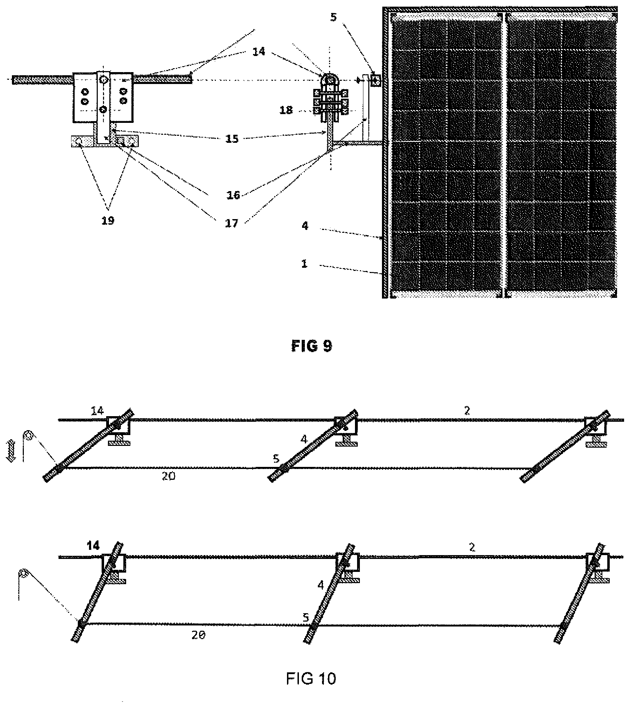

Figure 9.-It shows a schematic front and side view of the fixed carrying support (14) mounted on the steel supporting cable (2), from which a hanging plate (15), rotation axis (18), is suspended. The connecting bar (16) connects two fixed carrying supports (14) perpendicular to both.
Figure 10.-It shows a schematic side view of an aerial photovoltaic solar installation on a horizontal, or with a slight slope, steel supporting cable (2), where you can see the photovoltaic modules suspended from the fixed carrying supports (14). In the upper part of the figure the modules have a slope 30° (summer). By acting on one of the ends of the line of lower connection bars (20) the angle of the metallic structure (4) can be adjusted, and therefore, the angle of the photovoltaic modules. In the lower part of the figure the modules have a slope 66° (winter).

A list of the elements represented in the figures that make up the invention is provided below:
1= photovoltaic modules
2= steel support cable, closed o semi-closed type
3= supports at the ends of the support cable
4= metallic support structure of the photovoltaic modules
5= suspension points from the metallic structure
6= support carriage
7= steel tractor cable, open or closed
8= support carriage wheel
9= perpendicular joining bar between two support carriages
10= L-shaped fixed support, attached to the bearing carriage (bolted or welded)
11= support carriage wheel axis = support metal structure rotation axis
12.1= longitudinal connection bar between two support carriages
12.2 = longitudinal connection bar between suspension points
13= spindle to adjust the inclination of the metal support structure of the photovoltaic modules
14= fixed carrying support
15= hanging plate
16= perpendicular connecting bar between two fixed supports
17= L-shaped fixed support, attached to the hanging plate (bolted or welded)
18= hanging plate rotation axis
19= eyelets at the hanging plate bottom ends
20= lower connecting bar

### Preferred embodiment of the invention

In view of the figures mentioned, and in accordance with the numbering adopted, you can see an example of the preferred embodiment of the invention, so-called mobile aerial photovoltaic installation, which includes the parts and elements described below. So, as can be seen in Figures 1, 2 and 3, initially the support structures (3) will be assembled at the ends of the steel supporting cables (2). These structures can be metallic, concrete or one, or both, ends of the supporting cables can be anchored to a rocky slope. Subsequently, the two steel supporting cables (2), closed or semi-closed type cables, and the two steel traction cables (7) will be installed. Depending on the difference in height between both ends of the installation, the steel traction cable can be open or closed (option represented in Figures 5, 6, 7 and 8).

Next, as can be seen in Figures 4 and 5, two support carriages (6) are mounted on each steel supporting cable (2), they are joined by means of the union bar (9), which is perpendicular to both supporting cables, and which is bolted to one of the lower ends of the cars. Each support carriage (6) is then connected to the steel traction cable (7). Subsequently a group of photovoltaic modules (1) mounted on a metallic structure (4) is suspended. The function of the metallic structure (4) is to serve as a support for the photovoltaic modules and to prevent any mechanical effort from acting on them that could degrade them. Its design will depend on the number of modules, the distance between supporting cables, and especially the climatic conditions of the area where the installation will be located (wind, snow, thermal loads, corrosion...). Special attention will be paid to avoid its twisting and/o bending. The metallic structure (4) has 4 points of suspension of the structure (5). The two upper suspension points of the structure (5) are connected to two supports (10) by means of a system that allows the rotation of the metallic structure (4) on the horizontal axis (11). Each fixed support (10) is L-shaped and is bolted/welded to the support carriage (6). The design of the suspension points of the structure (5) and of the fixed support (10) must allow absorbing both axial and radial loads.

After completing the previous operation the steel traction cable (7) is activated to drag the first set of support carriages (6) + metallic structure (4) until it allows the longitudinal connection bars to be assembled between two support carriages (12.1). This connection allows rotation about an axis perpendicular to the longitudinal plane of the supporting carriage (6). In this way, the assembly of more support carriages (6) + metallic structure (4) sets is proceeded successively, as can be seen in the upper part of Figure 6.

In horizontal installations, or with a small height difference between both ends of the installations (see Figure 6), two longitudinal connection bars will also be mounted between suspension points (12.2) to join the structure lower (5) suspension points. The connecting bars (12.1) and (12.2) are not of equal length. In this type of mobile aerial photovoltaic installation, only the first support carriage (6) will be attached to the steel tractor carriage (7). Repeating the operations described above, the entire mobile aerial photovoltaic installation will be deployed, as can be seen in the lower part of figure 6. Acting on one of the ends of the line of lower connection bars (12.2), the angle of the metal structures (4) can be adjusted, and therefore, the angle of the photovoltaic modules (1) to maintain the optimum inclination of the panels, both in winter and in summer (see also figure 10). As the mobile aerial photovoltaic installation is being deployed, the wiring that connects the different groups of photovoltaic modules together is installed, as well as the necessary electrical apparatus. Ducts and electrical apparatus boxes suitable for the climatic conditions of the area in which the installation will be located will be used, which will be fixed to the longitudinal connection bars between two support carriages (12.1) to prevent them from suffering mechanical stress during deployment and/or operation of the installation.

In installations where the slope of the steel supporting cable (2) is greater than 15°/20°, a second pair of support carriages (6) will be assembled to suspend the metallic structure (4) also from its structure lower (5) suspension points, dispensing with the lower connection bars (12.2). This second pair of carrying carriages (4) will also be joined by means of the union bar (9), which is perpendicular to both carrying carriages. In figure 7 you can see a mobile aerial photovoltaic installation with a slope of 30°. In this type of mobile aerial photovoltaic installation, only the first support carriage (6) will be attached to the steel tractor carriage (7), and given the slope, an open tractor cable can be used. In this case, the connection bars (12.1) can have different length, since to connect two sets (bar 12.1-2 figure 6) of 4 support carriages + 1 metallic structure, it is not necessary to maintain the same distance as between support carriages of an individual set (bar 12.1-1 figure 7).

The slope of the photovoltaic modules is given by the slope of the steel supporting cable (2). Since the slope along a cable suspended from its ends (catenary) will never be constant, the ability to adjust the slope of the panels will be decisive in maintaining the optimum inclination of the panels, both in winter and in summer, and especially in installations with large bays and/or unevenness, or if cables with little tension are used. To solve this problem, as can be seen in figure 8, in case of a slope greater than 30°, to regulate the angle of inclination of the photovoltaic modules, the fixed support (10) is replaced by a spindle (13) in the lower support carriage (4). The minimum length of this spindle is equal to that of the fixed support (10). The stroke of the spindle (13) will be chosen based on the difference between the slope of the closed steel supporting cable (2) with respect to the optimal angle of inclination of the panel (30° in the case of figure 8). Alternatively, this spindle (13) can be replaced by a cylinder, or another type of device, which also allows us to vary the angle of inclination of the photovoltaic modules with respect to the slope of the cable. Likewise, this regulation can be manual (acting on each spindle), or it can be automated acting at a distance by means of solenoid valves or servomotors. In the case of slopes of less than 30°, the adjustment procedure is the same, but the adjustment is made on the upper support carriage. (4).

We will describe below another preferred embodiment of the invention, which we will call a fixed aerial photovoltaic installation, which comprises the parts and elements that are described below, in view of the aforementioned figures, and in accordance with the numbering adopted.

Thus, as can be seen in figures 1, 2 and 3, initially the support structures (3) will be mounted at the ends of the steel supporting cables (2). These structures can be metallic, concrete, or one, or both, of the ends of the supporting cables can be anchored to a rocky slope. Subsequently, the 2 steel supporting cables (2), closed or semi-closed type cables, will be installed. In this second preferred embodiment, the use of steel tractor cables is not necessary.

Next, as can be seen in figures 9 and 10, the fixed carrying supports (14) that embrace the steel supporting cables (2) are mounted in pairs and tightened by means of at least 4 screws. Subsequently, the carrying supports are joined by means of the union bar (16), which is perpendicular to both fixed carrying supports, and which is screwed to the hanging plate (15). Subsequently, the groups of photovoltaic modules (1) mounted on a metal structure (4) will be suspended, through the upper suspension points of the structure (5), which are connected to the support (17) by means of a system that allow the rotation of the metallic structure (4) on a horizontal axis. Said fixed support (17) is L-shaped and is bolted/welded to the hanging plate (15). This is how the assembly of more sets of fixed carrying support (6) + metallic structure (4) is successively proceeded, as can be seen in the upper part of figure 10. In principle, in a fixed aerial photovoltaic installation it is not necessary to assemble longitudinal connection bars between fixed carrying supports (14) unlike what happens in a mobile aerial photovoltaic installation where the carrying carriages are joined longitudinally to each other by means of the longitudinal union bars (12.1), unless you want to increase the resistance of the installation as a whole, in which case there is a hole (19) at each lower end of the hanging plate (15) to allow the installation of steel tensioning cables, or another material of similar resistance, as can be seen in figure 9.

As in a mobile aerial photovoltaic installation, in horizontal installations, or with a small difference in height between both ends of the installation (see figure 10), lower connection bars (20) will be mounted to longitudinally join the lower suspension points of the structure (5). Acting on one of the ends of the line of lower longitudinal connection bars (20) the angle of the metal structures (4) can be adjusted, and therefore, the angle of the photovoltaic modules (1) to maintain the optimal inclination of panels.

As in a mobile aerial photovoltaic installation, in installations where the slope of the closed-type steel supporting cable (2) is greater than 15°/20°, a second pair of fixed carrying supports (14) will be mounted to suspend the metal structure (4) also by its structure lower suspension points (5), dispensing with the lower connection bars (20). This second pair of fixed carrying supports (14) will also be joined by means of the connecting bar (16), which is perpendicular to them.

Likewise, to regulate the angle of inclination of the photovoltaic modules, proceed in the same way as in a mobile aerial photovoltaic installation: the fixed support (17) is replaced by a spindle (13) in one of the (14) fixed carrying supports, either the lower one (slopes greater than 30°) or the upper one (slopes less than 30°) of each group of photovoltaic modules.

In the event that you want to increase the resistance of the whole fixed aerial photovoltaic installation, especially in areas with strong winds, at each lower end of the hanging plate (15) there is a hole (19), as can be seen in Figure 9 to allow the installation of steel or other material of similar resistance tensioning cables. These tension cables allow the fixed supports to be joined together either longitudinally or crosswise or allow the fixed support to be attached to an external anchor point.

## Claims

1. AERIAL PHOTOVOLTAIC SOLAR INSTALLATION **characterized in that** it comprises the following elements:
- Several photovoltaic modules (1)
- At least two supporting cables (2)
- Two supports (3), one at each of the ends, of each supporting cable
- A metal support structure (4) for the photovoltaic modules (1)
- Four suspension points (5) from the metallic structure (4)
- Two support carriages (6) from which the metal structure (4) is suspended
- A traction cable (7)
- A perpendicular connecting bar between two support carriages (9)
- Two longitudinal connection bars between suspension points (12.1)

2. AERIAL PHOTOVOLTAIC SOLAR INSTALLATION, according to claim 1, **characterized in that** it consists of the use of 4 support carriages (6) + 2 perpendicular connecting bars between support carriages (9) to suspend 1 metal support structure (4) from photovoltaic modules (1), and where the bars with longitudinal connection between suspension points (12.2) are dispensed with.

3. AERIAL PHOTOVOLTAIC SOLAR INSTALLATION, according to claim 2, **characterized in that** it comprises the replacement, in 2 of the support carriages (5), of the L-shaped fixed support (10) by a spindle, a cylinder or another type of mechanical and/or electrical device (13), either manually or remotely operated, to allow the adjustment of the angle of inclination of the photovoltaic modules.

4. AERIAL PHOTOVOLTAIC SOLAR INSTALLATION, according to claim 1, **characterized in that** it comprises the replacement of the two support carriages (6) by two fixed carrying supports (14) from which the metal support structure (4) of the photovoltaic modules (1) is suspended and where the tractor cable is dispensed with. A perpendicular connecting bar will be used between two fixed carrying supports (16) and two lower connection bars between suspension points (20). Each fixed carrying support (14) has two eyelets (19) that allow the installation of tensor cables to stiffen the installation as a whole.

5. AERIAL PHOTOVOLTAIC SOLAR INSTALLATION, according to claim 4, **characterized in that** it consists of the use of 4 fixed carrying supports (14) + 2 perpendicular connecting bars between two fixed carrying supports (16) to suspend a metal support structure (4) of the photovoltaic modules (1) and where the lower connection bars between suspension points (20) are dispensed with.

6. AERIAL PHOTOVOLTAIC SOLAR INSTALLATION, according to claim 5, **characterized in that** it comprises the replacement, in 2 of the fixed carrying supports (14), of the L-shaped fixed support (17) by an spindle, a cylinder or another type of mechanical and/or electrical device (13), either manually or remotely operated to allow the adjustment of the angle of inclination of the photovoltaic modules.

7. AERIAL PHOTOVOLTAIC SOLAR INSTALLATION, according to claim 1, **characterized in that** it comprises longitudinal mounting, on each pair of supporting cables (2), of 2 or more sets made up of 2 support carriages (6) + a perpendicular joining bar between two support carriages (9) + a metal supporting structure (4) of the photovoltaic modules (1), joined by the corresponding longitudinal connection bars between support carriages (12.1) and longitudinal connection bars between suspension points (12.2).

8. AERIAL PHOTOVOLTAIC SOLAR INSTALLATION, according to claim 2, **characterized in that** it comprises longitudinal mounting, on each pair of supporting cables (2), of 2 or more sets made up of 4 support carriages (6) + two perpendicular joining bars between two support carriages (9) + a metal structure (4), joined by the corresponding longitudinal connection bars between support carriages (12.1-1 and 12.1-2).

9. AERIAL PHOTOVOLTAIC SOLAR INSTALLATION, according to claim 3, **characterized in that** it comprises longitudinal mounting, on each pair of supporting cables (2), of 2 or more sets made up of 4 support carriages (6) + two perpendicular joining bars between two support carriages (9) + a metal structure (4), joined by the corresponding longitudinal connection bars between support carriages (12.1-1 and 12.1-2) and with the capacity to adjust the angle of inclination of the photovoltaic modules.

10. AERIAL PHOTOVOLTAIC SOLAR INSTALLATION, according to claim 4, **characterized in that** it comprises longitudinal mounting, on each pair of supporting cables (2), of 2 or more sets made up of 2 fixed carrying supports (14) + 1 perpendicular connecting bar between two fixed carrying supports (16) + 1 metal structure (4), joined by the corresponding longitudinal lower connection bars between suspension points (20).

11. AERIAL PHOTOVOLTAIC SOLAR INSTALLATION, according to claim 5, **characterized in that** it comprises longitudinal mounting, on each pair of supporting cables (2), of 2 or more sets made up of 4 fixed carrying supports (14) + 2 perpendicular connecting bars between two fixed carrying supports (16) + 1 metal structure (4).

12. AERIAL PHOTOVOLTAIC SOLAR INSTALLATION, according to claim 6, **characterized in that** it comprises longitudinal mounting, on each pair of supporting cables (2), of 2 or more sets made up of 4 fixed carrying supports (14) + 2 perpendicular connecting bars between two fixed carrying supports (16) + 1 metal structure (4) and with the capacity to adjust the angle of inclination of the photovoltaic modules.
